# EUROPÄISCHE PATENTSCHRIFT

(11) **EP 0 859 679 B1**
(45) Veröffentlichungstag und Bekanntmachung des Hinweises auf die Patenterteilung: **03.04.2002**
(21) Anmeldenummer: 96938118.5
(22) Anmeldetag: 06.11.1996
(51) Int. Cl.: B23B 27/00, B23B 51/04

(54) **BOHRWERKZEUG MIT AUSWECHSELBARER SPITZE**
DRILLING TOOL WITH REPLACEABLE BIT
OUTIL DE PER AGE AVEC POINTE REMPLACABLE

(30) Priorität: 07.11.1995 DE 19543233
(43) Veröffentlichungstag der Anmeldung: 26.08.1998
(73) Patentinhaber: Johne + Co. Präzisionswerkzeuge GmbH, 46286 Dorsten (DE)
(72) Erfinder: JOHNE, Frank, D-49393 Lohne (DE)
(74) Vertreter: Effert, Bressel und Kollegen
(86) Internationale Anmeldenummer: EP9604854
(87) Internationale Veröffentlichungsnummer: WO9717153

(56) Entgegenhaltungen:
- EP-A- 0 138 336
- WO-A-89/08519
- WO-A-92/20483
- DE-A- 3 306 209
- DE-A- 3 616 230
- DE-A- 3 709 878
- US-A- 5 399 051

## Beschreibung

Die Erfindung betrifft ein Bohrwerkzeug mit auswechselbarer Spitze gemäß den Oberbegriffen der Patentansprüche 1 und 2.

In dem Dokument DE -A- 36 16 230 ist ein gattungsgemäßes Bohrwerkzeug offenbart, bei dem die Bohrerspitze mindestens zwei symmetrisch zur Achse des Werkzeuges angeordnete Schneidkanten aufweist, geeignet, jeweils einen Radius der Bohrung voll spanend zu überstreichen. Die Befestigungseinrichtungen haben ein koaxiales Zentrierungsmittel und mindestens zwei an ihrer Mantelfläche angeordnete Mitnehmereinrichtungen und wirken mit komplementär ausgebildeten Einrichtungen am Bohrerschaft zusammen. Die Befestigungseinrichtungen sind aus anderem Material gestaltet als die Bohrerspitze selbst und die Mitnehmereinrichtungen sind relativ kompliziert gestaltet, sodass ein Auswechseln umständlich ist.

Aus der US-A-5 399 051 ist eine aus mindestens zwei Teilen bestehende auswechselbare Bohrerspitze bekannt, bei der der Schaft und die Spitze durch einen einsetzbaren Stift gekoppelt sind. Die Kraftübertragung ist daher auf geringe Leistungen an der Bohrerspitze beschränkt.

Aus der Praxis ist ein gattungsgemäßes Werkzeug bekannt, das für Bohrtiefen bis zum achtfachen Bohrungsdurchmesser geeignet ist und wobei ein Pilotbohrer zentrisch in einem Bohrkopf angeordnet ist. Dieser Pilotbohrer wird am Bohrkopf durch aufgeschraubte Wendeschneidplatten ergänzt, von denen mindestens eine innen in der Nähe des Pilotbohrers und eine weitere Schneidplatte außen sitzt und so den effektiven Bohrdurchmesser erzeugt.

Derartige Bohrköpfe haben eine schaftseitige mehrzahnige Kopffläche, die in komplementär ausgebildete Vor- oder Rücksprünge am Bohrerschaft eingesetzt und durch in Achsrichtung liegende Schrauben den Bohrkopf mit dem Bohrerschaft verbinden. Der Pilotbohrer sitzt dabei in einer im Bohrkopf zentrisch angeordneten und den Bohrkopf durchdringenden Bohrung und reicht bis in ein zentrisches Sackloch des Bohrerschaftes. Im Bohrerschaft wird der Pilotbohrer durch eine quer zur Bohrachse angeordnete Spannschraube fixiert, die in eine entsprechende Aussparung am Außenumfang des Pilotbohrers eingreift. Zusätzlich kann die Achse des Pilotbohrers, welche auch noch mit einem zentrischen Kühlkanal versehen sein kann, durch eine ortogonal zur Achse des Pilotbohrers seitlich im Bohrerschaft einzusetzende Einstellschraube in Achsrichtung gekippt werden.
Als Wendeschneidplatten werden sowohl dreieckige als auch viereckige Platten aus Hartmetall eingesetzt.

Bei einer ähnlichen Ausführungsform sind der Pilotbohrer und die Schneidplatten direkt an der Bohrerspitze durch quer zur Achse angeordnete Spannschrauben oder mittels Spannpratzen befestigt.

Probleme bereitet bei derartigen Bohrern, die für den Durchmesserbereich von 20 bis 50 mm oder größer erhältlich sind, das Einrichten derartiger Bohrerspitzen aufgrund der asymmetrischen Schneidverhältnisse, wobei der Pilotbohrer exakt auf die Bohrgeometrie und das zu bohrende Metall einzustellen ist. Die Schneidkanten des Bohrers sind nicht durchgängig über den Radialumfang verteilt, und die Schneidplatten liegen um einen geringen Betrag hinter der Spitze des Pilotbohrers zurück. Dies bereitet erhebliche Probleme beim Anbohren von mit Drehzentierungen versehenen Werkstücken oder beim Anbohren von schrägen Flächen, die um mehr als 4 bis 8° geneigt sind. Diese Bohrer sind darüber hinaus nicht geeignet, vorgebohrte Werkstücke aufzubohren, da keine Zentrierung des Bohrwerkzeuges zur Achsmitte der zu erzeugenden Bohrung möglich ist. Beim Paketbohren entsteht am Bohrungsaustritt immer ein kleiner Absatz, da der Pilotbohrer an dieser Stelle bereits außer Schnitt ist und die asymmetrischen Schneiden den zu zerspanenden Werkstoff einseitig wegdrücken. Aus konstruktiven und materialtechnischen Gründen können derartige Bohrer auch für Bohrungsdurchmesser unterhalb 20 mm nicht hergestellt werden und bei den kleineren Durchmessern besteht das Problem des Spänestaues in Achsmitte..

Andererseits ist die Verwendung normaler HSS-Bohrer für Durchmesser unter 20 mm für viele Anwendungsbereiche, insbesondere bei hohem Vorschub und hoher Schnittgeschwindigkeit, insbesondere für "schmierende" Werkstoffe und große Bohrtiefen unwirtschaftlich, da nach kurzer Zeit mangels geeigneter Kühlmöglichkeit die Schneidflächen und Führungsflächen überhitzen und nachgeschliffen werden müssen.

Aus der DE 37 09 878 C2 ist ein HSS-Bohrer mit auswechselbarer Spitze bekannt, bei dem die mit zwei vollständigen radialen Schneiden versehene Spitze mit ihrer schaftseitigen Fläche in einer entsprechend ausgebildeten Zentrierung der Kopffläche eines Bohrerschaftes plaziert und mittels zwei parallel zur Bohrerachse angeordneter Gewindestifte mit dem Bohrerschaft verbunden wird. Der Bohrer kann auch Kühlkanäle aufweisen. Eine derartige Bauweise ist für Bohrerdurchmesser unter 12 mm nicht realisierbar und der Wechsel der Spitze wegen des Zeitaufwandes teurer als der Bohrer.

Aus der DE 33 06 209 C2 wurde ein auswechselbarer Hartmetall-Einsatz mit Doppelschneide für Bohrer geringerer Durchmesser bekannt. In einem entsprechend vorbereiteten Bohrerschaft kann dabei von einer speziell ausgefrästen Spannut her eine Schneidplatte mit schaftseitigem Zentrierzapfen in Mitte des Bohrerschaftes eingesetzt und entgegen der Arbeitsdrehrichtung des Bohrers in einen Plattensitz vor einen Mitnehmer am Schaft geschwenkt werden. Dabei wird die schaftseitige Fläche der Schneidplatte gegen eine Kopffläche des Plattensitzes am Bohrerschaft geklemmt, indem der Zentrierzapfen mit seiner kegelartigen Mantelfläche während der Schwenkbewegung eine spiralförmige Bewegung zur Schaftseite hin ausführt und so die Schneidplatte mitzieht.
Diese Befestigungsart erzeugt in der Hartmetallplatte Spannungen, die sich in der Taille zwischen Zapfen und Platte als überlagerte Biege- und Torsionsmomente konzentrieren. Bei Belastungen durch das Zerspanen wird der Hartmetalleinsatz dann an dieser Stelle bruchanfällig. In der Praxis hat sich daher diese Anordnung nicht durchgesetzt

Von daher liegt der Erfindung das Problem zugrunde, für insbesondere Bohrungen im Bereich ab 5 mm bis etwa 50 mm einen wirtschaftlichen und exakt bohrenden Bohrer mit auswechselbarer Spitze zu entwickeln, bei dem die Vorteile des Bohrwerkzeuges mit Pilotbohrer ausgenutzt aber dessen Nachteile vermieden werden sollen und trotzdem Bohrtiefen bis zum achtfachen Durchmesser erreichbar sind. Der Spitzenwechsel soll einfach möglich sein, die Spitze aber eine sichere Befestigung haben.

Das Problem wird erfindungsgemäß durch die Ansprüche 1 und 2 gelöst. Vorteilhafte Weiterbildungen der Erfindung sind in den abhängigen Ansprüchen angegeben.

Die Erfindung geht von der Grundidee aus, daß auf einem optimal geformten Bohrerschaft hinsichtlich entsprechend großer Spanabflußnuten, einer Kühlmittelzuführung und hoher Stabilität für große Bohrtiefen bis etwa achtmal Bohrdurchmesser eine auswechselbare Bohrerspitze aufgesetzt wird, mit der die vielfältigsten Bohraufgaben realisierbar sind. Dazu kommen nur Bohrerschäfte in Frage, wie sie in allen mechanischen Werkstätten Verwendung finden und in der Regel aus HSS- oder HSSE-Werkzeugstahl bestehen und einen integrierten universellen Spannschaft haben für die entsprechende Werkzeugaufnahme in Werkzeugmaschinen. Der Bohrerschaft kann nicht aus Hartmetall bestehen, da die mögliche Torsion bei den in Frage kommenden Durchmessern und Bohrtiefen größer als der Bruchwiderstand dieses Materials wäre. Andere Schneidwerkstoffe, wie Keramik oder Diamant sind zu teuer für Bohrerschäfte.

Es sollten sowohl handelsübliche Bohrwerkzeuge für kleine Bohrungen ab 10 mm aufwärts als auch die bisherigen im Einsatz befindlichen Werkzeuge mit Pilotbohrem durch das erfindungsgemäße Werkzeug ersetzt werden, da es preiswerter ist, nur die Bohrerspitzen auszuwechseln als komplizierte Bohrwerkzeuge bzw. nach Gebrauch die ebenfalls üblichen Spiralbohrer zu verschrotten. Dabei soll es auch möglich sein, die üblichen im Einsatz befindlichen Wendeschneidplalten zu verwenden und ähnliche Bohrleistungen zu erzielen, wie bei Hartmetallbohrern bzw. mit Diamanten oder Keramik bestückten Bohrern oder solchen mit eingelöteter, aber wärmeempfindlicher Hartmetallspitze bzw. für die größeren Bohrungen die Leistungen der bekannten, mit Schneidplatten bestückten Bohrer zu erreichen bei gleicher Bohrgüte und Rundlaufgenauigkeit.

Ein für derartige Bohrtiefen geeignetes Bohrwerkzeug der angegebenen Art trägt an seiner Spitze eine lösbare, formschlüssig befestigte Bohrerspitze, wobei die Bohrerspitze erfindungsgemäß mindestens zwei symmetrisch zur Achse des Werkzeuges angeordnete Schneidkanten aufweist, die jeweils einen Radius der Bohrung voll spanend überstreichen, mit einer integrierten einstückig an der Bohrerspitze angeordneten Befestigungseinrichtung versehen sind, die zumindest ein axiales Zentrierungsmittel und radial am Umfang bzw. ihrer Mantelfläche angeordnete, z.B. zwei gegenüberliegende Mitnehmereinrichtungen umfassen. Diese sind in komplementär ausgebildete Befestigungseinrichtungen am Bohrerschaft einsetzbar und dort durch quer zur Achse einbringbare, sich abweichend von der Radialrichtung erstreckende, Fixierelemente, wie beispielsweise Schrauben, festsetzbar sind.

Alternativ zu derartigen Mitnehrmereinrichtungen am Umfang der Bohrerspitze können diese auch an den axialen Zentrierungsmitteln angebracht sein oder additiv zu diesen für doppelte Sicherheit bei der Befestigung sorgen.

Eine zweite generelle erfindungsgemäße Lösung besteht darin, daß anstelle der separat an der Bohrerspitze zu befestigenden Mitnehmereinrichtung die Bohrerspitze und der Bohrerschaft an ihren ineinander greifenden Enden jeweils mit einer durch Drehung der Bohrerspitze im Bohrerschaft erzeugten Klemmverbindung realisiert wird. Dabei wird die Kontaktfläche der Teile als Preßpassung ausgebildet und/oder die Bohrerspitze wird bis zu einem Anschlag am Bohrerschaft gedreht. Durch Hinterschnitte läßt sich zugleich eine formschlüssige Arretierung in axialer Längsrichtung des Werkzeuges erreichen.

Für Bohrungen ab etwa 5 mm Durchmesser kann die Bohrerspitze vorzugsweise einstückig aus homogenem Material bestehen und integrierte Schneidkanten aufweisen, welche von der Achse her gesehen in Draufsicht annähernd geradlinig radial auswärts und rückwärts geneigt verlaufen. Für größere Bohrdurchmesser ab etwa 12 oder 15 mm aufwärts können die Schneidkanten auch geteilt sein in mehrere Schneiden, mindestens jedoch zwei Schneiden je Radius. Die innere dieser Schneiden, die sich bis zur Achse des Bohrwerkzeuges erstreckt, besteht dann wieder aus homogenem Material und ist einstückig mit dem Körper der Bohrerspitze verbunden, während die äußere oder die äußeren Schneiden aus Schneidplatten gebildet werden, die beispielsweise aus Hartmetall bestehen. Diese Ausbildung der Spitze wird angewendet, wenn keine oder nur eine geringe Querschneide angebracht ist, oder die Querschneide ausgespitzt ist. Bei Bohrern mit Vier-Flächen-Schliff bezieht sich die vorhergehende Beschreibung nicht auf die Querschneide, welche erfindungsgemäß zusätzlich aus dem homogenen Material der Bohrerspitze gebildet wird.

Es können handelsübliche Wendeschneidplatten in Dreiecks- oder Vierecksform eingesetzt werden. Im Gegensatz zum Schaft kann die Bohrerspitze wegen ihrer geringen Torsionsbelastung auch aus Hartmetall oder Pulvermetall bestehen oder aus gehärtetem Werkzeugstahl hergestellt sein. Dieser Werkzeugstahl wird vorzugsweise an der Spitze der Bohrer, die von den Schneidkanten gebildet wird und gegebenenfalls auch auf den Spanflächen und Freiflächen zusätzlich mit einer die Schnittkräfte und Reibkräfte reduzierenden Beschichtung versehen sein, z.B. aus Titankarbit oder Titannitrit.

Die Mitnehmereinrichtung an der Bohrerspitze besteht im wesentlichen bei einer bevorzugten Ausführungsform aus Aussparungen am Umfang der Bohrerspitze, die über kongruente, am Bohrerschaft befestigte Mitnehmersteine stülpbar sind oder bei denen auch der Bohrerschaft entsprechende Aussparungen aufweist, so daß ein für beide Teile gemeinsamer, in die Aussparungen beider Teile einsetzbarer Mitnehmerstein Verwendung finden kann. Dabei können die Mitnehmersteine mit Ihrer Druckfläche in radialer Richtung oder parallel dazu in der Bohrerspitze sitzen. Vorzugsweise wird die durch die Zerspanungskräfte beaufschlagte Seite des Mitnehmersteines jedoch etwa parallel zur Schneidkante angeordnet, damit der Kern der Bohrerspitze nicht unnötig geschwächt wird.

Der Vorteil einer derartigen Anordnung ist, daß die Kupplungen oder Befestigungseinrichtungen die Bohrer mit Toleranzen von maximal 1/100 mm zentrieren, so daß der exakte Sitz der Bohrerspitze auf dem Bohrerschaft und ein exaktes Bohrergebnis garantiert werden kann. Dies ist unabhängig von den Schneidenkonfiguration und hängt lediglich von der Genauigkeit der zu koppelnden Befestigungselemente ab. Um diese Genauigkeit zu erreichen, mußten Bohrwerkzeuge nach clem Stand der Technik, die mit Pilotbohrem arbeiten, erst nach Probebohrungen in dem entsprechenden Material bei entsprechenden Bohrtiefen auf eine exakte Position für exaktes Bohren eingestellt werden, was nicht zuletzt auch auf die asymmetrische Schneidkantenausbildung derartiger Werkzeuge zurückgeführt wird.

Anstelle der bisher genannten Mitnehmersteine, die in etwa quaderförmig in entsprechende Aussparungen am Bohrerschaft und der Bohrerspitze einschraubbar sind, ist es ebenfalls erfindungsgemäß möglich, Mitnehmersteine zu verwenden, die in Gebrauchslage zum Spannschaft hin geneigte Keilnasen haben, so daß beim Einschrauben der Steine eine Spannwirkung in Richtung Spannschaft auf die Bohrerspitze ausgeübt wird. Dies setzt natürlich komplementär ausgebildete Keilflächen an den Mitnehmemuten der Bohrerspitze voraus.

Die Radialmitnehmer können allerdings auch an in den Bohrerschaft einzubringenden Zapfen der Bchrerspitze angebracht sein, so daß vom Bohrerschaftumfang her nur noch die orthogonal zur Bohrerachse angeordnete Schraube zum Fixieren der Bohrerspitze in ihrer axialen Lage relativ zum Bohrerschaft eingebracht werden muß. Selbstverständlich ist auch das Umkehrprinzip möglich, nämlich daß der Bohrerschaft einen Zapfen aufweist, der in eine entsprechende Bohrung an der Bohrerspitze greift, wobei auch in diesem Fall die entsprechenden Mitnehmernuten und Mitnehmersteine Verwendung finden können. Diese Mitnehmereinrichtung ist für sich z.B.aus der WO 89/08519 bekannt.

In einer alternativen Form sind die Nutensteine bereits durch entsprechende Verbindungstechniken, z.B. Löten, Schweißen oder Kleben, am Bohrerschaft befestigt, und die Bohrerspitze wird durch vertikales Überschieben der Mitnehmernuten oder ein kombiniertes vertikales rotatorisches Vorfixieren der Bohrerspitze im Bohrerschaft, z.B. nach Art eine Bajonettverschlusses und anschließendes Befestigen mittels der zuvor beschriebenen Schraube fixiert. Darüber hinaus ist erfindungsgemäß vorgesehen, daß die Bohrerspitze an dem Schaft oder der alternativen Vertiefung mit Rücksprüngen oder Vorsprüngen ausgestattet ist, die ein Zentrieren der Bohrerspitze auf einer Bearbeitungsmaschine ermöglichen, z.B. zum Nachschleifen der Bohrerspitze.

Der Eingriff der Fixierungsschraube, welche durch den Bohrerschaft und in den Zapfen oder durch entsprechende Bohrungen der Bohrerspitze greift, kann so ausgebildet sein, daß die Schraube durch ein Gewinde am Bohrerschaft selbst oder in den zuvor beschriebenen Mitnehmersteinen quer zur Bohrerachse eingesetzt wird und in entsprechenden Sacklöchem des Zapfens der Bohrerspitze diese in axialer Richtung arretiert.

Ein Verzicht auf die zuvor beschriebenen Mitnehmereinrichtungen ist bei der zweiten erfindungsgemäßen Lösung möglich. Hier sind die Mitnehmer Form- und/oder Reibschluß zur Bohrerspitze bewirkende integrale Formteile am Kopf dies Bohrerschaftes. In einer Version wird kombinierter Reib- und Formschluß zwischen der an die Freifläche oder Spanfläche der Bohrerspitze anschließende Umfangs- oder Mantelfläche einerseits, sowie einem zapfenartigen Vorsprung am Bohrerschaft andererseits erzeugt. Dieser Vorsprung verbreitert sich in Fixier-Drehrichtung der Bohrerspitze, die zugleich der Richtung der auf die Schneidkante wirkenden Spankräfte entspricht, in Richtung Achse des Bohrwerkzeuges und bildet so eine Keilfläche mit Keilwinkeln bis zum 10°, vorzugsweise bis 5° wegen der dabei wirkenden Selbsthemmung (kleiner Reibwinkel). Bei einem symmetrischen echten Zwei-Schneiden-Werkzeug läßt sich so zugleich eine Zentrierung der Bohrerspitze im Bohrerschaft erwirken. Zur Fixierung in axialer Richtung kann dieser Vorsprung zugleich mit einem Hinterschnitt, vorzugsweise ebenfalls einer schrägen Keilfläche, versehen sein in die eine komplementäre Umfangsfläche der Bohrerspitze greift.
Bei einer zweiten Version wird die Zentrierung der Bohrerspitze in axialer und radialer Richtung am Zapfen der Bohrerspitze realisiert. In einer konzentrischen Bohrung des Bohrerschaftes wird ein Zapfen eingesetzt, der in seiner Fixier-Drehrichtung einen zunehmenden Durchmesser aufweist und der maximal eine Preßpassung in konzentrischen Bohrung erzeugen kann. Da in diesem Fall die übertragbaren Momente geringer sind, als bei der ersten Version wird der Bohrerschaft vorzugsweise mit Vorsprüngen versehen, an die eine komplementär ausgebildete Umfangsfläche der Bohrerspitze anschlagen kann und so die Zerspanungskräfte direkt in den Bohrerschaft geleitet werden.
Bei dieser Version kann die Zapfen-/Bohrungs-Paarung zylindrisch sein oder der Zapfen eine konische, zum Bohrerschaft hin dickere Gestalt haben, bei entsprechender Gestaltung der Gegenfläche am Bohrerschaft. Dies ist möglich, wenn die Spannut bzw. die Vorsprünge am Bohrerschaft so gestaltet sind, daß die Bohrerspitze seitlich zwischen die Vorsprünge geschoben werden kann.

Bei allen Versionen, bei denen der Bohrerschaft axiale Vorsprünge für die Verbindung mit der Bohrerspitze aufweist, können vorteilhaft die Kühlmittelbohrungen durch diese Vorsprünge bis zur Spanfläche geführt oder an der Bohrerspitze auf die Schneidkanten gerichtet werden.

Ein derartiges Bohrwerkzeug wird vorzugsweise für das Bohren in das Vollmaterial oder für das Aufbohren von Metallen eingesetzt, vorzugsweise auch für Werkstoffe, die lange Späne bilden, soweit die Bohrungen einen Durchmesser von etwa 5 bis etwa 50 mm haben. Kleinere Bohrungen können mit dem System nicht mehr kostengünstig erzeugt werden, wenn eine Bohrung für Kühlflüssigkeiten erforderlich ist und größere Bohrungen lassen sich mit anderen Werkzeugen besser erstellen. Bei kleinen Bohrern können jedoch lange Späne ein tiefes Bohren behindern, so daß in Ergänzung der Erfindung vorgesehen ist, die Schneiden mit Kerben, Spanbrechernuten oder sonstigen für sich bekannten Einrichtungen zu versehen, die ein Brechen des Spanes erwirken. Dazu kann erfindungsgemäß die Schneidkante auch gestuft ausgebildet sein.

Eine weiter bevorzugte Verwendung dieses Bohrwerkzeuges ergibt sich beim Paketbohren, das ist ein Bohren übereinander gestapelter Platten, die komplett durchbohrt werden müssen. Die erfindungsgemäße Art des Ausbildens der Schneidkante und auch des entsprechenden rückwärts gerichteten Winkels der Schneidkante ermöglichen es hier, einwandfrei und ohne Absätze eine derartige Bohrung zu erzeugen. Die Schneidkanten sollten bei den angegebenen Bohraufgaben, dazu gehört auch das Anbohren schräger Werkstückkanten, so ausgebildet sein, daß das Verhältnis der inneren Schneide zur gesamten Länge der Schneidkante etwa 1:2 bis 1:10, vorzugsweise etwa 1:3 bis 1:6, beträgt.

Dabei kann die innere Schneide um 20 bis 600 %, bezogen auf ihre Schneidenbreite, in Richtung Bohrtiefe vor den äußeren Schneiden angeordnet sein.

Letztlich kann die innere Schneide die äußere Schneide um maximal 5 mm in radialer Richtung überragen, so daß die Anschnittbedingungen für die äußeren Schneiden günstiger werden. Dies bedingt eine zur Bohrwerkzeugspitze gerichtete konische Vergrößerung des Vorsprunges, der in der inneren Schneide endet. Damit wird auch das Problem vermieden, daß Wendeplatten oder eingelötete Hartmetallschneiden dann häufig versagen, wenn die Schnittgeschwindigkeit im Zentrum des Bohrwerkzeuges gegen Null tendiert.

Anhand von Ausführungsbeispielen soll die Erfindung näher erläutert werden, ohne sie auf die Ausführungsbeispiele zu beschränken. Es zeigen:
- Figur 1: eine Seitenansicht einer ersten Ausführungsform der Bohrerspitze;
- Figur 2a-c: eine Draufsicht auf die Bohrerspitze gemäß bzw. analog Figur 1;
- Figur 3: einen Bohrerschaft in Seitenansicht;
- Figur 4: einen Schnitt A-A durch den Bohrerschaft gemäß Figur 3;
- Figur 5: eine Ansicht X des Bohrerschaftes gemäß Figur 3;
- Figur 6: einen Schnitt B-B durch einen Bohrerschaft gemäß Figur 5;
- Figur 7: eine Seitenansicht einer zweiten Ausführungsform der Bohrerspitze;
- Figur 8: eine Draufsicht auf die zweite Ausführungsform der Bohrerspitze gemäß Figur 7;
- Figur 9: eine Draufsicht auf eine dritte Ausführungsform der Bohrerspitze ähnlich Figur 2;
- Figur 10: einen Schnitt C-C durch die dritte Ausführungsform gemäß Figur 9,
- Figur 11: eine vierte Ausführungsform der Erfindung;
- Figur 12: die Ausführung gemäß Fig. 11 in Ansicht Y;
- Figur 13: einen Schnitt D-D gemäß Fig. 12;
- Figur 14: eine fünfte Ausführungsform der Erfindung im Schnitt F-F gemäß Fig. 15;
- Figur 15: eine Ansicht Z des Werkzeuges gemäß Fig. 14;
- Figur 16: einen Schnitt E-E durch das Werkzeug gemäß Fig. 14;
- Figur 17: das Werkzeug in Teilschnitt G-G gemäß Fig. 16;
Gleiche Teile oder zumindest gleichwirkende Teile sind im folgenden mit gleichen Bezugsziffern versehen.

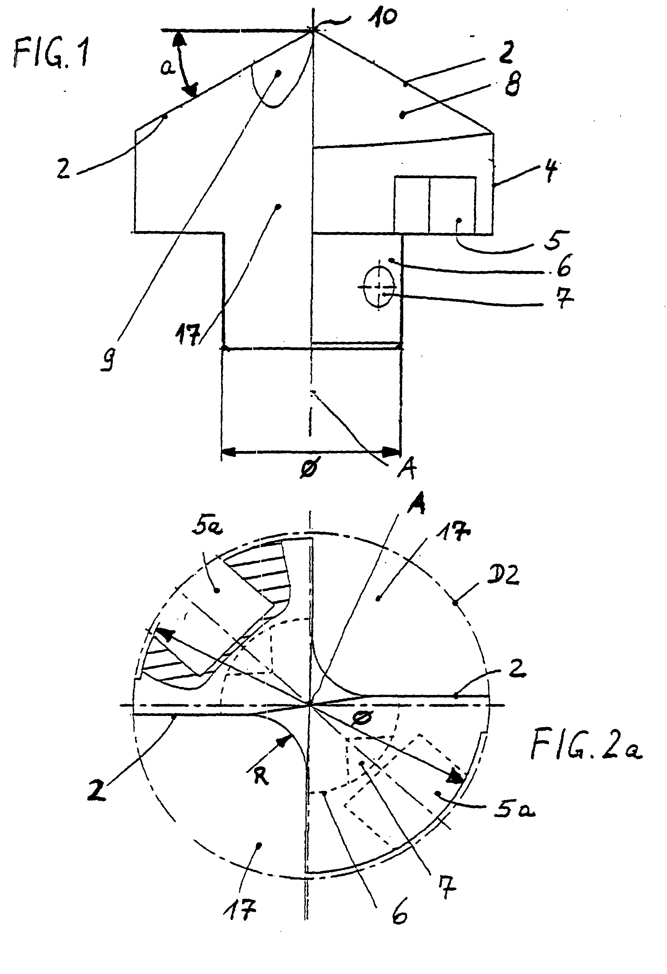

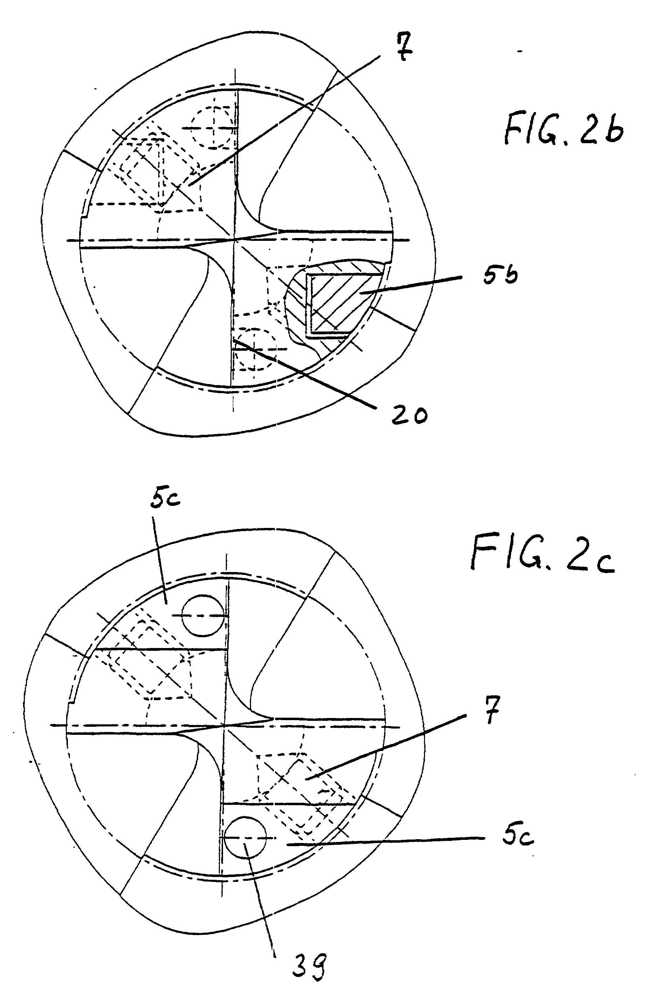

Eine Bohrerspitze 1 für eine formschlüssige lösbare Befestigung in einem Bohrerschaft (Figur 2b,c) ist in Figur 1 dargestellt. Die Bohrerspitze hat, beginnend von ihrer Spitze 10 zwei unter einem rückwärts radial auswärts geneigten Winkel a von etwa 25°, zwei Schneidkanten 2, die durch Spanflächen 9 bzw. Spannuten 17 einerseits und durch die Freifläche 8 eingeschlossen sind und an der Umfangsfläche 4 enden, so daß ein Bohrloch mit dem Durchmesser D 2 erzeugt werden kann. Die Bohrerspitze wird mit Schaft 6 in den Bohrerschaft eingesetzt und in Sackbohrungen 7 mittels nicht dargestellter Schrauben axial gesichert. Für die radiale Sicherung sind Mitnehmernuten 5 am Umfang 4 der Bohrerspitze vorgesehen.
Die Draufsicht gemäß den Figuren 2a,b verdeutlicht diverse Mitnehmemuten 5a und 5b gemäß Fig.1 in einem Teilschnitt. Fig. 2c zeigt analog einen Mitnehmer 5c als Vorsprung am Bohrerschaft. Die Schneiden 2 sind als von der Werkzeugspitze beginnende Radiale bis zum Durchmesser D 2 spanabhebend tätig, wenn ins Volle gebohrt wird. Auch ist zu sehen, daß die Schneiden 2 symmetrisch zur Achse A der Bohrerspitze angeordnet sind. Dadurch ist eine gleichmäßige Kräfteverteilung, besser ein gleiches Kraftmoment, relativ zur Achse zu erwarten und eine genaue zentrische Bohrung erzeugbar. Beide Figuren zeigen eine 5- bis 10fache Vergrößerung einer Feinbohrspitze, mit der es gelingt, Bohrdurchmesser auf ± 1/100 mm genau herzustellen. Der Bohrverlauf über eine Länge von 7 x D 2 liegt bei maximal 2/10 mm.

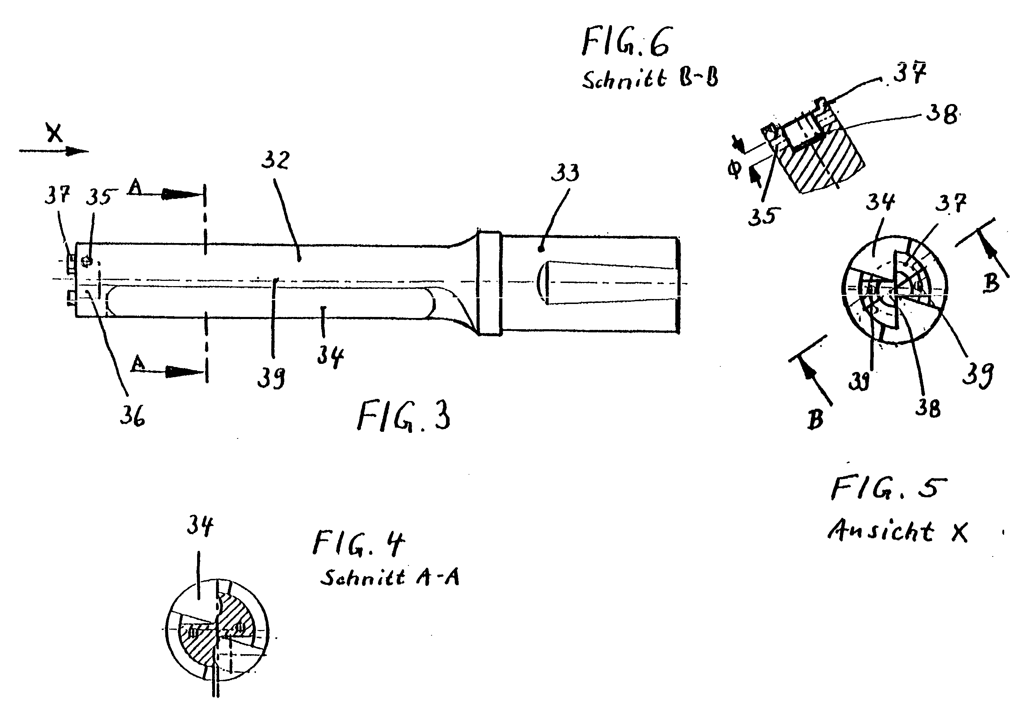

Figur 3 zeigt eine Aufnahmeeinrichtung für eine Bohrerspitze 1 mit dem Bohrerschaft 32 und dem Spannschaft 33 für handelsübliche Werkzeugmaschinen. Der Bohrerschaft 32 weist in Fortsetzung der Spannuten 17 der Bohrerspitze 1 ebenfalls Spannuten 34 auf.

Figur 5 zeigt eine Ansicht X auf den Bohrerschaft gemäß Figur 3, während der Bohrerschaft in Figur 4 gemäß Schnitt A-A durch Figur 3 in seiner Kontur dargestellt ist. Zentrisch im Bohrerschaft ist eine Sacklochbohrung 38 (Figur 5) angeordnet, in die der Schaft 6 der Bohrerspitze eingelassen werden kann, bis deren verbreiteter Kopf auf den kreisringsegmentartigen Vorsprüngen 37 des Bohrerschaftes 32 zur Anlage kommt. Durch Gewindeloch 35 kann dann eine Fixierschraube bis in die entsprechende Sacklochbohrung 7 des Schaftes 6 der Bohrerspitze 1 geschraubt werden und so die Bohrerspitze auf dem Bohrerschaft 32 fixiert wird.

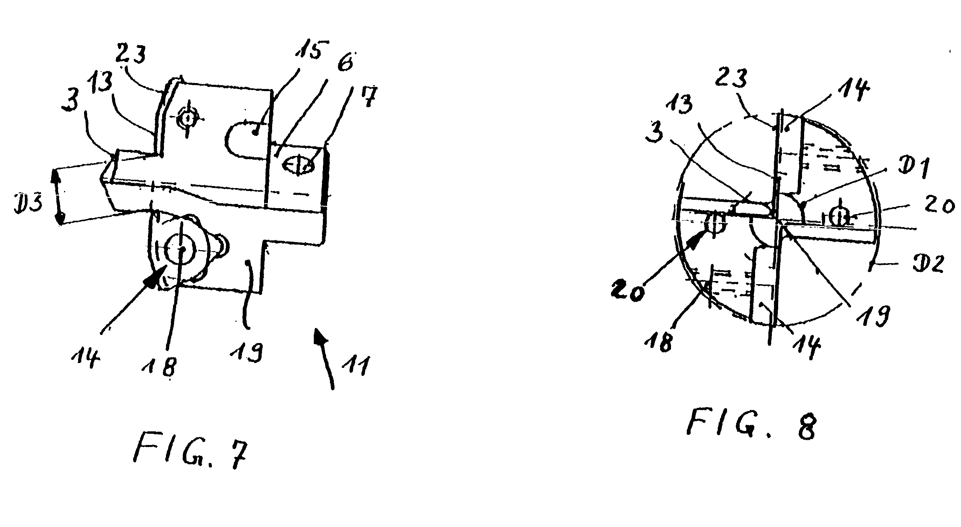

Figur 7 zeigt eine zweite Ausführungsform der erfindungsgemäßen Bohrerspitze für Bohrungen mit Durchmesser D 2. Auch diese Bohrerspitze weist zur Befestigung am Bohrerschaft (Figur 3) einen Schaft 6 und eine Fixierbohrung 7 sowie Mitnehmernuten 15 auf. Die Bohrerspitze hat jedoch in diesem Fall eine in drei Schneiden 3, 13, 23 zerlegte Schneidkante, welche zusammengesetzt dem Radius der Bohrung D 2 entspricht. Die zentrumsnahe Schneide 3 wird von einem einstückig in den Körper integrierten Vorsprung der Bohrerspitze gebildet, während die weiteren Radialteile der Schneidkanten von Schneiden 13 und 23 an Schneidplatten 14 gebildet werden, die sich bis zum Umfang der Bohrerspitze entsprechend dem zu erzeugenden Durchmesser D 2 erstrecken. Dabei ist auch vorgesehen, daß die beiden den Durchmesser D 1 bildenden Schneiden 3 in Summe breiter sind als der von den Schneiden 13 und 23 freigelassenen konzentrischen Teile, hier mit D 3 bezeichnet. Dadurch wird erreicht, daß der Durchmesser D 1 etwas größer geschnitten wird als die durch D 3 begrenzte Lücke der Schneiden 13 zur Achse der Bohrerspitze hin erfordert. Dadurch ergibt sich ein zusätzliches Freischneiden des vorgebohrten Bereiches D 1 und eine günstige Anschnittbedingung für die Schneiden 13. Die Schneide 23, die Teil der Wendeplatte 14 ist, welche mittels einer Befestigung 18 an der Bohrerspitze 11 befestigt werden kann, ist radial auswärts und rückwärts zur Schneide 3 bzw. Achse A geneigt. Auch die Schneidkante 13 könnte in gleicher Weise geneigt sein. Ebenso ist es möglich, daß die Schneiden 3, 13, 23 auf einer Projektionslinie angeordnet sind, so daß sich ähnlich wie bei der Schneide 2 in Figur 1 eine gemeinsame geradlinige Schneidkante ergibt. Eine derartige Anordnung ist besonders interessant für das Aufbohren und das Paketbohren von metallischen Werkstücken, da in diesen Fällen keine Probleme mit der Zentrierung oder der Ausbildung einer Quetschkante beim Austritt eines im Paket zu bohrenden Plattenstapels ergeben.

Figur 8 zeigt in Draufsicht diese Bohrerspitze, wobei zu erkennen ist, daß auch noch Kühlkanäle 20 eingebracht werden können, um auch die Bohrerspitze zu kühlen, wobei die Kühlflüssigkeit durch den Bohrschaft mittels entsprechender Kühlmittelleitungen 39 (Figuren 3 bis 5) geleitet wird. Die Schneidplatten 14 können als dreieckförmige oder viereckförmige einseitige oder doppelseitige Wendeschneidplatten ausgebildet sein, die mittels der Befestigung 18 in einem entsprechenden Sitz im Bereich der Spannuten 19 der Bohrerspitze anzuordnen sind. Als Hartmetalle werden in diesem Fall Pulvermetalle, die zu entsprechenden Platten gepreßt sind, verwendet; in gleicher Weise können jedoch auch andere Hartmetalle oder Schneidkeramiken Verwendung finden. Die Erfindung ist nicht auf die Verwendung bestimmter Schneidplatten limitiert. Die gesamte Bohrerspitze 11 besteht vorzugsweise aus gehärtetem Werkzeugstahl, HSS-Stahl, oder aus Hartmetallen selbst. Die eigentliche Spitze des Bohrers im Bereich des Durchmessers D 1, zumindest jedoch die Schneidkanten 3 und die Spanflächen sowie Freiflächen, werden vorzugsweise mit die Schnittkräfte und Vorschubkräfte reduzierenden Beschichtungen versehen, z.B. Titan-Karbid oder Titan-Nitrit.

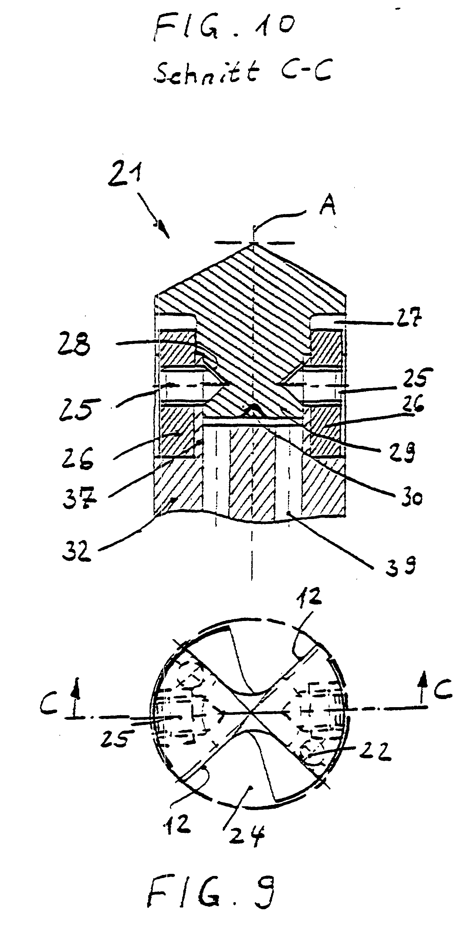

Figur 9 zeigt eine dritte Ausführungsform der Bohrerspitze, ähnlich der Ausführungsform gemäß der Figur 2 bzw. 1 in Draufsicht. Zugleich ist in Kombination mit Figur 10 die Befestigung einer derartigen Bohrerspitze beispielhaft auf einem Schaft 31 (Figur 3) dargestellt. Bei der hier gezeigten Bohrerspitze 21 mit den durchgehenden Schneiden und Schneidkanten 12 sind die Spannuten etwas gedrallt, um für langspanenden Werkstoff eine günstige Spanabfuhr zu erreichen. Auch aus dem Schnitt C-C, der um 90° zu den Spannuten 24 versetzt ist und die Achse des Bohrwerkzeuges schneiden, ist gemäß Figur 10 zu erkennen, daß die Bohrerspitze 21 in dem Schaft 31 fixiert werden kann.

Die Numerierung der Teile in den Figuren 3 bis 6 und die entsprechende Beschreibung dort ist bei der Erläuterung zu Figur 10 heranzuziehen. Die Bohrerspitze weist an ihrem zum Schaft 32 gerichteten Ende konzentrisch zur Achse A einen Schaft 29 auf, der seitlich mit einer eingelassenen Zentrierbohrungen 28 versehen ist. Dieser zum Bohrerschaft 32 in kongruenter Form ausgebildete Schaft kann in eine entsprechende Bohrung 38 (Figur 6) so weit eingesetzt werden, bis er mit Teilen seiner Kontur auf die Vorsprünge 37 zur Anlage kommt. Der Schaft 32 weist seitlich Aussparungen auf, in die Mitnehmersteine 26 einfügbar sind. Mittels einer Zentrierschraube 25, welche durch entsprechende Gewinde in Mitnehmersteinen 26 durchgeschraubt wird, kann der Schaft von der Schraube 25 in dem Sackloch 28 in axialer Richtung fixiert wird. In radialer Richtung wird die Bohrerspitze durch die Mitnehmersteine 26, die sich sowohl in entsprechende Aussparungen am Bohrerschaft als auch in die Mitnehmernuten 27 der Bohrerspitze 21 erstrecken, gesichert und drehmomentenfest formschlüssig gespannt. Über Kühlmittelleitungen 39 im Schaft 32 bzw. 22 in der Bohrerspitze kann den Schneiden 12 Kühlmittel zugeführt werden mittels einer nicht dargestellten Pumpeinrichtung. Die Bohrerspitze kann bei Bedarf nachgeschliffen werden; für eine entsprechende Zentrierung ist eine Einsenkung 30 in den Schaft der Bohrerspitze 21 vorgesehen.

Bei der Ausführungsform gemäß Fig. 11 weist die Bohrerspitze mit 8mm Außendurchmesser einen zylindrischen Zapfen 6 auf, der in der Bohrung 48 des Schaftes 42 eingesetzt ist. Die Arretierung der Bohrerspitze 41 erfolgt in der Mitnehmereinrichtung 47, die als geschwungener, segmentartiger Vorsprung des Bohrerschaftes 42 ausgebildet ist.

In der Draufsicht gemäß Fig. 12 ist zu sehen, daß die Bohrerspitze 41 hinter der Schneide 2 an ihrer Umfangsfläche eine starke Verjüngung hat, die komplementär zu der Verbreiterung des segmentartigen Teiles 47 des Schaftes 42 ausgebildet ist. Durch diese Ausbildung ist es möglich die Bohrerspitze 41 aus einer Vor-Position zwischen den Segmenten 47 rechts herum in Richtung des Pfeiles R zu drehen, sobald der Zapfen 6 in Bohrung 48 eingesetzt ist und die rückwärtige Fläche 49 Bohrerspitze an dem Bohrerschaft 42 anliegt. Die Bohrerspitze 41 kann dann in Pfeilrichtung so lange eingedreht werden, bis sie klemmend an dem Segment 47 anliegt. Durch die Zerspanungskräfte, die auf die Schneide 2 wirken wird dieser Druck noch verstärkt, so daß ein Lösen dieser Klemmung nicht möglich ist. Zur Vermeidung eines Versetzen in Richtung Achse A, was durch den Bohrdruck unmöglich erscheint, aber theoretisch durch Haken des Bohrers möglich ist, wird vermieden, indem Segment 47 von seiner Stirnfläche, gekennzeichnet durch Kante 47 a, bis zu einem axial tiefergelegenem Bereich der Bohrerspitze, gekennzeichnet durch die Bezugsziffer 47 b, mit einem Hinterschnitt versehen ist, in den die komplementär ausgebildete Mantelfläche der Bohrerspitze eingreift.

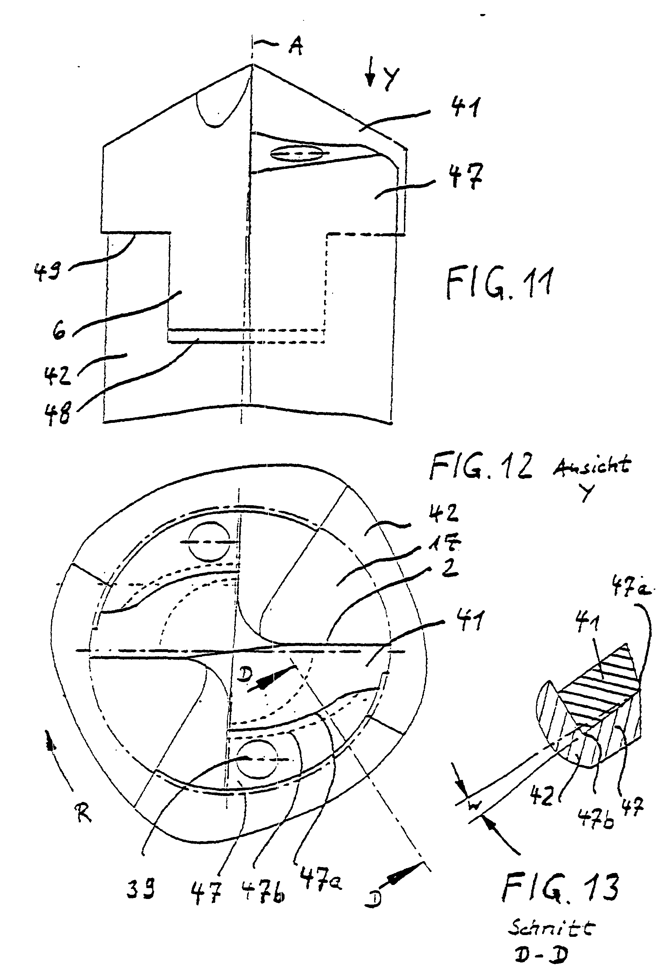

Fig. 13 zeigt den Hinterschnittwinkel w zwischen den Kanten 47a und 47b in einer Größe von etwa 1-8° gemäß Schnitt D-D in Fig. 12. Das Segment 47 verbreitert sich in Richtung Achse A mit einer Steigung von etwa 1-10° und die komplementär ausgebildete Bohrerspitze ist entsprechend verjüngt.

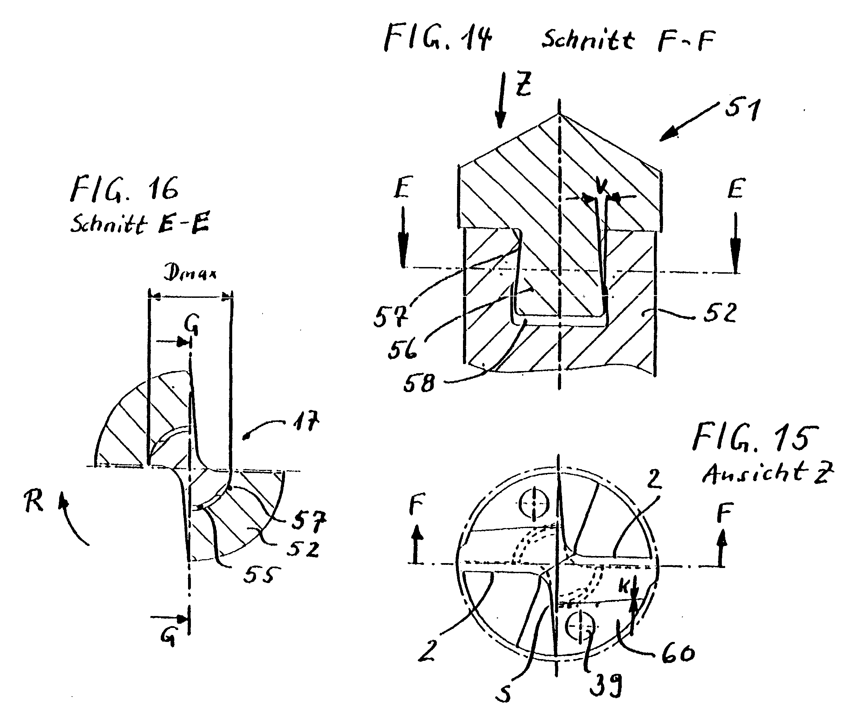

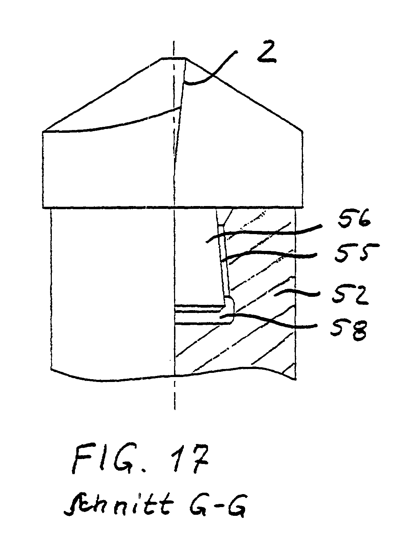

Fig. 14 zeigt eine weitere Ausführungsform des Werkzeuges im Schnitt F-F gemäß Fig. 15, wobei Fig. 15 eine Ansicht Z von Fig. 14 ist. In diesem Fall ist eine Klemmung des Schaftes 56 in Bohrung 58 des Bohrerschaftes 52 vorgesehen, alternativ zu der gemäß in Figuren 11 bis 13 beschriebenen Klemmung am größeren Umfanges der Bohrerspitze hinter dem Schneidenbereich. Während in Fig. 14 gemäß Bezugsziffer 57 der Zapfen 56 an dem Bohrerschaft 52 anliegt, zeigt Fig. 17 gemäß Schnitt G-G in Fig. 16 eine gegenüber Fig. 14 um 90° gedrehte Ansicht der Bohrerspitze. Daraus ist ersichtlich, daß in dieser Position der Bohrerschaft 52 gegenüber der Bohrerspitze 51 mit Zapfen 56 ein Spiel 55 hat. Dieses Spiel 55 verengt sich in Richtung auf die Preßpassung 57, wo der Zapfen sein Größtmaß Dmax hat; dies ist im Schnitt E-E in Fig. 16 zu sehen. In diesem Fall ist es also der Zapfen der an der Kontaktstelle 57 in dem Bohrerschaft 52 klemmt, wenn die Bohrerspitze 51 gemäß Pfeil R (Fig. 16) gedreht wird, nachdem zunächst der Zapfen 56 in Bohrung 58 des Bohrerschaftes eingeführt wurde. Die Bohrerspitze 51 kann dabei gedreht werden bis sie an die stirnseitigen keilförmigen Vorsprünge 60 am Kontaktpunkt K des Bohrerschaftes 52 anschlägt; sie bildet dabei in Richtung Achse A mit dem Vorsprung einen Spalt S, der dem Einfügen der Bohrerspitze in den Schaft dient.
Der Zapfen 56 der Bohrerspitze kann dabei zylindrisch bis konisch ausgebildet sein, um die Wirkung des anhand der Bohrerspitze 41 beschriebenen Winkels w zu erzeugen. Hier ist der Winkel mit v bezeichnet; er ist 0-8° groß. Im Falle, daß der Winkel V=0° ist, kann der Zapfen wie zuvor bei der Version gemäß Fig. 10, Teil 25, beschrieben, in axialer Lage gesichert sein. Eine Sicherung in axialer Lage ist auch möglich, indem der zylindrische Zapfen einen Bund erhält, der in dem Freistich 58 (Fig. 14) sitzt, so daß der Zapfen nicht aus dem Bohrerschaft gezogen wird.

Die schaftseitige Rückfläche der Bohrerspitze und die Kopffläche des Bohrerschaftes müssen im Montagezustand nicht plan aneinanderliegen. Insofern zeigt Fig. 14 einen idealisierten schematischen Zustand. Bei der Bohrarbeit sorgt die Reaktion der Vorschubkraft - Richtung Z in Fig 14 - für eine - nicht erforderliche - Pressung der Spitze auf den Schaft des Bohrers. Entscheidend ist allein, daß der Zapfen (Fig. 14 oder andere Umfangsteile (Fig. 12) der Bohrerspiltze radial geklemmt werden.

## Patentansprüche

1. Bohrwerkzeug mit auswechselbarer Spitze, geeignet für Bohrtiefen größer dem Vierfachen des Durchmessers der zu erzeugenden Bohrung, mit einem Bohrerschaft, der an einem Ende mit einem Spannschaft für Werkzeugmaschinen versehen ist und am anderen Ende eine lösbar formschlüssig befestigbare Bohrerspitze trägt,
wobei die Bohrerspitze
- mindestens zwei symmetrisch zur Achse (A) des Werkzeuges angeordnete Schneidkanten (2) aufweist, geeignet, jeweils einen Radius der Bohrung voll spanend zu überstreichen;
- Befestigungseinrichtungen hat, die ein koaxiales Zentrierungsmittel (6, 56) und mindestens zwei an ihrer Mantelfläche angeordnete Mitnehmereinrichtungen (5, 47a, 57) umfassen und mit komplementär ausgebildeten Einrichtungen (5b, 5c, 47, 60) am Bohrerschaft (42, 52) zusammenwirken,
**daurch gekennzeichnet, daß**
- mindestens Teile der Schneidkante (2, 3, 12, 13, 23) mit der Befestigungseinrichtung (5) einstückig aus Schneidwerkstoff gebildet sind und
- die Mitnehmereinrichtungen ( 5b, 5c, 47a, 56) sich abweichend von der Radialrichtung und quer zur Achse (A) des Werkzeuges in der Bohrerspitze erstrecken.

2. Bohrwerkzeug, geeignet für Bohrtiefen größer dem Vierfachen des Durchmessers der zu erzeugenden Bohrung, mit einem Bohrerschaft, der an einem Ende mit einem Spannschaft für Werkzeugmaschinen versehen ist und am anderen Ende mittels jeweils komplementär ausgebildeter Befestigungseinrichtungen lösbar reib- und/oder formschlüssig mit einer Bohrerspitze verbindbar ist,
wobei die Bohrerspitze
- mindestens zwei symmetrisch zur Achse (A) des Werkzeuges angeordnete Schneidkanten (2, 3, 12, 13, 23) aufweist, geeignet, jeweils einen Radius der Bohrung voll spanend zu überstreichen;
- zwei Spannuten (17, 19, 24, 34) aufweist, die sich bis in den Bohrerschaft (42, 52) erstrecken;
- nach Drehung um einen vorbestimmbaren Winkel an einem Mitnehmer ( 5c, 37, 47, 60) des Bohrerschaftes anliegt;
die Befestigungseinrichtungen koaxiale Zentrierungsmittel (6, 56)und zusammenwirkende Reibflächen und/oder Hinterschnitte umfassen , mindestens Teile der Schneidkante (2,3, 12, 13, 23) mit den Befestigungseinrichtungen einstückig aus Schneidwerkstoff gebildet sind; die Spannuten (17) sich bis in die Zentrierungsmittel erstrecken,
**dadurch gekennzeichnet, daß**
die Bohrerspitze am Bohrerschaft (42, 52) mit ihrer radialen Mantelfläche an einander diagonal beabstandeten Abschnitten (Paarung 41/47 bzw. 56/52) klemmend gehalten wird, wobei nach der Drehung der Bohrerspitze die zusammenwirkenden Reibflächen (41/47 bzw. 56/52) Keilwinkel bis zu 10° bilden.

3. Bohrwerkzeug nach Anspruch 1 oder 2, **dadurch gekennzeichnet, daß** die Bohrerspitze (1, 21, 41,51) einstückig aus homogenem Material besteht und integrierte Sichneidkanten (2, 12) aufweist, die außer in Achsennähe von der Achse (A) her in Draufsicht annähernd geradlinig radial auswärts und in Achsrichtung rückwärts geneigt oder gestuft verlaufen.

4. Bohrwerkzeug nach einem der Ansprüche 1 bis 3, **dadurch gekennzeichnet, daß** die Schneidkanten radial in zwei oder mehr Schneiden (3, 13, 23) aufgeteilt sind, von denen mindestens je eine bis zur Achse (A) reichende radiale innere (3) aus demselben Material wie die Bohrerspitze (11) besteht und eine äußere (13, 23) von einer mit der Bohrerspitze verschraubten Schneidplatte (14) aus anderem Material gebildet wird.

5. Bohrwerkzeug nach einem der Ansprüche 1 bis 4, **dadurch gekennzeichnet, daß** die Bohrerspitze im wesentlichen aus einem Schneid-Werkstoff besteht, ausgewählt aus der Gruppe bestehend aus Hartmetall, Pulvermetall, Diamantmaterial, keramischen Stoffen, Werkzeugstahl gehärtet sowie derartigen reib- oder verschleißmindemd beschichteten Materialien.

6. Bohrwerkzeug nach einem der Ansprüche 1 bis 5, **dadurch gekennzeichnet, daß** die Mitnehmereinrichtung aus Aussparungen (5) an der Mantelfläche (4) besteht, in die als Mitnehmersteine (26) ausgebildete Einrichtungen, welche den Bohrerschaft (32) überragen, eingreifen.

7. Bohrwerkzeug nach einem der Ansprüche 2 bis 6, **dadurch gekennzeichnet, daß** die Reibflächenpaarungen und Hinterschnitte unter Winkel von 0-10°, vorzugsweise 1 - 8° angeordnet sind.

8. Bohrwerkzeug nach einem der Ansprüche 1 bis 6, **dadurch gekennzeichnet, daß** die komplementären Mitnehmereinrichtungen aus T-förmigen Nuten und Steinen besteht.

9. Bohrwerkzeug nach einem der Ansprüche 1 bis 6 oder 8, **dadurch gekennzeichnet, daß** die Mitnehmersteine eine in Gebrauchslage zum Spannschaft (33) hin geneigte Keilnase haben und mittels Schrauben am Bohrerschaft derart verschraubbar sind, daß die Keilnase die Bohrerspitze axial verspannt.

10. Bohrwerkzeug nach Anspruch 1 oder 2, **dadurch gekennzeichnet, daß** das axiale Zentrierungsmittel aus einem in den Bohrerschaft einsteckbaren konzentrischen, zylindrischen Zapfen besteht, der mit äußeren Rücksprüngen oder Vorsprüngen versehen ist.

11. Bohrwerkzeug nach Anspruch 10, **dadurch gekennzeichnet, daß** die Rücksprünge radial am Zapfen angeordnet und zusätzlich oder anstelle der am Umfang angeordneten Mitnehmereinrichtungen vorgesehen und/oder für den Eingriff einer Schraube ausgebildet sind.

12. Bohrwerkzeug nach Anspruch 10, **dadurch gekennzeichnet, daß** die Rücksprünge als Mittenzentrierung (30) für eine rotatorische Bearbeitung der Bohrerspitze (21) in den Zapfen (29) eingelassen oder als Vorsprünge an der Stirnfläche des Zapfens angeordnet sind.

13. Bohrwerkzeug nach Anspruch 1 oder 2, **dadurch gekennzeichnet, daß** das axiale Zentrierungsmittel aus einer über einen entsprechenden Vorsprung am Bohrerschaft stülpbaren konzentrischen Bohrung besteht, die mit axsial sich erstreckenden Vorsprüngen oder Rücksprüngen versehen ist.

14. Bohrwerkzeug nach einem der vorhergehenden Ansprüche, **dadurch gekennzeichnet, daß** die Mitnehmereinrichtungen (5b, 5c) sich vorzugsweise etwa parallel zur Schneidkante (2, 3, 12, 13, 23) erstrecken.

15. Bohrwerkzeug nach Anspruch 3, **dadurch gekennzeichnet, daß** die innere radiale Schneide (3) gegenüber der äußeren Schneide (13, 23) einer Schneidkante um das 0,2 bis 6 fache ihrer Breite in Achsrichtung vorspringt.

16. Bohrwerkzeug nach Anspruch 3 oder 15, **dadurch gekennzeichnet, daß** die innere radiale Schneide (3) die äußere Schneide (13) um maximal 5mm in radialer Richtung überragt.

17. Bohrwerkzeug nach einem der Ansprüche 1 bis 16, **gekennzeichnet durch** ein Verhältnis der Länge der inneren radiale Schneide zur gesamten Schneidkante von 2 bis 10. angeordnete Schneidkanten (2, 3, 12, 13, 23) aufweist, geeignet, jeweils einen Radius der Bohrung voll spanend zu überstreichen;
- zwei Spannuten (17, 19, 24, 34) aufweist, die sich bis in den Bohrerschaft (42, 52) erstrecken;
- nach Drehung um einen vorbestimmbaren Winkel an einem Mitnehmer ( 5c, 37, 47, 60) des Bohrerschaftes anliegt;
die Befestigungseinrichtungen koaxiale Zentrierungsmittel (6, 56)und zusammenwirkende Reibflächen und/oder Hinterschnitte umfassen ,
**dadurch gekennzeichnet, daß**
mindestens Teile der Schneidkante (2,3, 12, 13, 23) mit den Befestigungseinrichtungen einstückig aus Schneidwerkstoff gebildet sind; die Spannuten (17) sich bis in die Zentrierungsmittel erstrecken und die Bohrerspitze am Bohrerschaft (42, 52) mit ihrer radialen Mantelfläche an einander diagonal beabstandeten Abschnitten (Paarung 41/47 bzw. 56/52) klemmend gehalten wird.

## Claims

1. Drilling tool with a interchangeable bit, suitable for drilling depths greater than four times the diameter of the bore to be produced, said tool having a drill shank, which is provided at one end with a clamping shaft for machine tools and carries, at the other end, a drill bit which is mountable in a detachable and form-locking manner,
the drill bit
- including at least two cutting edges (2), which are disposed symmetrically relative to the axis (A) of the tool and are suitable for sweeping over a respective radius of the bore in a fully machining manner, and
- having mounting arrangements, which include a coaxial centering means (6, 56) and at least two entrainment arrangements (5, 47a, 57) disposed on the surface of said mounting arrangements, and cooperate with correspondingly configured arrangements (5b, 5c, 47, 60) on the drill shank (42, 52),
**characterised in that**
- at least parts of the cutting edge (2, 3, 12, 13, 23) are formed integrally with the mounting arrangement (5) from cutting material, and
- the entrainment arrangements (5b, 5c, 47a, 56) extend in a deviating manner from the radial direction and transversely relative to the axis (A) of the tool in the drill bit.

2. Drilling tool, suitable for drilling depths greater than four times the diameter of the bore to be produced, said tool having a drill shank, which is provided at one end with a clamping shaft for machine tools and is connectable, at the other end, to a drill bit by means of respectively correspondingly configured mounting arrangements in a detachable and friction-locking and/or form-locking manner,
the drill bit
- including at least two cutting edges (2, 3, 12, 13, 23), which are disposed symmetrically relative to the axis (A) of the tool and are suitable for sweeping over a respective radius of the bore in a fully machining manner,
- including two grooves (17, 19, 24, 34), which extend into the drill shank (42, 52), and
- abutting against an entrainment arrangement (5c, 37, 47, 60) of the drill shank after rotation through a predeterminable angle,
the mounting arrangements including coaxial centering means (6, 56) and co-operating frictional faces and/or undercuts, at least parts of the cutting edge (2, 3, 12, 13, 23) being formed integrally with the mounting arrangements from cutting material, and
the grooves (17) extending into the centering means,
**characterised in that**
the drill bit is retained on the drill shank (42, 52) so as to clamp with its radial surface on portions (pair 42/47 or respectively 56/52), which are diagonally spaced apart from one another, the co-operating frictional faces (41/47 or respectively 56/52) forming wedge angles up to 10° after the rotation of the drill bit.

3. Drilling tool according to claim 1 or 2, **characterised in that** the drill bit (1, 21, 41, 51) is integrally formed from homogeneous material and includes integrated cutting edges (2, 12) which, besides extending in the vicinity of the axis (A), extend approximately rectilinearly radially outwardly when viewed from above and extend in a rearwardly inclined or stepped manner when viewed with respect to the axial direction.

4. Drilling tool according to one of claims 1 to 3, **characterised in that** the cutting edges are split radially into two or more edges (3, 13, 23), of which at least one respective radial internal edge (3), which extends to the axis (A), is formed from the same material as the drill bit (11), and an external edge (13, 23) is formed by a cutting plate (14), which is screw-connected to the drill bit and is formed from different material.

5. Drilling tool according to one of claims 1 to 4, **characterised in that** the drill bit is substantially formed from a cutting material selected from the group including hard metal, powdered metal, diamond material, ceramic substances, hardened tool steel as well as those materials which are coated so as to reduce friction or wear.

6. Drilling tool according to one of claims 1 to 5, **characterised in that** the entrainment arrangement comprises recesses (5) in the surface (4), and arrangements, which are in the form of entrainment blocks (26) and protrude beyond the drill shank (32), engage in said recesses.

7. Drilling tool according to one of claims 2 to 6, **characterised in that** the pairs of the frictional faces and undercuts are disposed at angles of 0 - 10°, preferably 1-8°.

8. Drilling tool according to one of claims 1 to 6, **characterised in that** the correspondingly configured entrainment arrangements comprise T-shaped grooves and blocks.

9. Drilling tool according to one of claims 1 to 6 or 8, **characterised in that** the entrainment blocks have a wedge-shaped projection, which is inclined towards the clamping shaft (33) in the position of use, and are screw-connectable, by means of screws on the drill shank, in such a manner that the wedge-shaped projection axially clamps the drill bit.

10. Drilling tool according to claim 1 or 2, **characterised in that** the axial centering means comprises a concentric, cylindrical pin, which is insertable into the drill shank and is provided with external recesses or projections.

11. Drilling tool according to claim 10, **characterised in that** the recesses are disposed radially on the pin and are provided in addition to or instead of the entrainment arrangements disposed on the periphery and/or are provided for the engagement of a screw.

12. Drilling tool according to clam 10, **characterised in that** the recesses are provided in the pin (29) as the central centering means (30) for the drill bit (21) to operate in a rotational manner, or they are disposed as projections on the end face of the pin.

13. Drilling tool according to claim 1 or 2, **characterised in that** the axial centering means comprises a concentric bore, which is invertable over a corresponding projection on the drill shank and is provided with axially extending projections or recesses.

14. Drilling tool according to one of the preceding claims, **characterised in that** the entrainment arrangements (5b, 5c) extend preferably substantially parallel to the cutting edge (2, 3, 12, 13, 23).

15. Drilling tool according to claim 3, **characterised in that** the internal radial edge (3), compared with the external edge (13, 23) of a cutting edge protrudes by 0.2- to 6-times its width when viewed with respect to the axial direction.

16. Drilling tool according to claim 3 or 15, **characterised in that** the internal radial edge (3) protrudes beyond the external edge (13) by a maximum of 5 mm when viewed with respect to the radial direction.

17. Drilling tool according to one of claims 1 to 16, **characterised by** a ratio of the length of the internal radial edge to the entire cutting edge of 2 to 10.

## Revendications

1. Outil de perçage avec pointe remplaçable, adapté pour des profondeurs de perçage plus importantes que le quadruple du diamètre de l'alésage à réaliser, avec une tige dont une extrémité est munie d'une tige de serrage pour machine-outil et dont l'autre extrémité est munie d'une pointe détachable, fixée par adhérence,
moyennant quoi la pointe de l'outil de perçage
- présente au moins deux arêtes tranchantes (2) placées de manière symétrique à l'axe (A) de l'outil, adaptées pour recouvrir chacune un rayon de l'alésage, pour un plein enlèvement des copeaux ;
- dispose de dispositifs de fixation qui englobent un moyen de centrage coaxial (6, 56) et au moins deux systèmes d'entraînement (5, 47a, 57) situés sur leur surface et qui coopèrent avec des systèmes complémentaires (5b, 5c, 47, 60), formés sur la tige de l'outil de perçage (42, 52)
**caractérisé en ce que**
- au moins des parties de l'arête tranchante (2, 3, 12, 13, 23) sont conçues en matière coupante et formées en monobloc avec le système de fixation (5) et
- les systèmes d'entraînement (5b, 5c, 47a, 56) s'étendent dans la pointe de l'outil de perçage, dans une direction non radiale et de manière transversale à l'axe (A).

2. Outil de perçage, adapté pour des profondeurs de perçage plus importantes que le quadruple du diamètre de l'alésage à réaliser, avec une tige dont une extrémité est munie d'une tige de serrage pour machine-outil et dont l'autre extrémité peut être reliée de manière amovible, par frottement et/ou par adhérence avec une pointe de l'outil de perçage, par l'intermédiaire de systèmes de fixation conçus respectivement de manière complémentaire,
moyennant quoi la pointe l'outil de perçage
- présente au moins deux arêtes tranchantes (2, 3, 12, 13, 23) placées de manière symétrique à l'axe (A) de l'outil, adaptées pour recouvrir chacune un rayon de l'alésage pour un plein enlèvement de copeaux ;
- présente deux rainures à copeaux (17, 19, 24, 34) qui s'étendent jusque dans la tige de l'outil de perçage (42, 52) ;
- après rotation autour d'un angle définissable d'avance, s'applique sur un entraîneur (5c, 37, 47, 60) de la tige de l'outil à percer ;
les systèmes de fixation englobent des moyens de centrage coaxiaux (6, 56) et des faces frottantes qui coopèrent et/ou des contre-dépouilles; au moins des parties de l'arête tranchante (2, 3, 12, 13,23) sont conçues en matière coupante et formées en monobloc avec les systèmes de fixation ; les rainures à copeaux (17) s'étendent jusque dans les moyens de centrage,
**caractérisé en ce que** la pointe de l'outil de perçage sur la tige de l'outil de perçage (42, 52) est maintenue par serrage de sa surface radiale sur des sections distancées entre elles en diagonale (appariement 41/47 ou 56/52), dans lequel cas, après la rotation de la pointe de l'outil de perçage, les faces frottantes coopérantes (41/47 ou 56/52) forment des angles de taillant d'outil jusqu'à 10 °.

3. Outil de perçage selon l'une quelconque des revendications 1 ou 2, **caractérisé en ce que** la pointe de l'outil de perçage (1, 21, 41, 51) est fabriquée d'une pièce dans un matériau homogène et présente des arêtes tranchantes intégrées (2, 12), qui hormis à proximité de l'axe, en vue par le dessus, s'étendent de manière presque rectiligne, en direction radiale vers l'extérieur, à partir de l'axe (A) et qui dans le sens de l'axe sont inclinées ou étagées vers l'arrière.

4. Outil de perçage selon l'une quelconque des revendications 1 à 3, **caractérisé en ce que**, en direction radiale, les arêtes tranchantes sont divisées en deux ou en plusieurs taillants (3, 13, 23), dont au moins un taillant radial intérieur (3) qui s'étend jusqu'à l'axe (A) est conçu dans le même matériau que la pointe de l'outil de perçage (11) et **en ce qu'**un autre taillant extérieur (13, 23) d'une matrice de découpage (14) vissée sur la pointe de l'outil de perçage est conçu dans un autre matériau.

5. Outil de perçage selon l'une quelconque des revendications 1 à 4, **caractérisé en ce que** la pointe de l'outil de perçage est essentiellement conçue dans un matériau coupant, sélectionné dans le groupe constitué de métal dur, métal pulvérisé, métal diamanté, matières céramiques, acier à outils trempé ou de matériaux revêtus anti-friction ou anti-usures de ce type.

6. Outil de perçage selon l'une quelconque des revendications 1 à 5, **caractérisé en ce que** le système d'entraînement est constitué d'évidements (5) prévus sur la surface (4), dans lesquels des systèmes conçus sous forme de galets d'entraînement (26) et dépassant de la tige de l'outil de perçage (32) viennent en prise.

7. Outil de perçage selon l'une quelconque des revendications 2 à 6, **caractérisé en ce que** les appariements de faces frottantes et les contre-dépouilles sont placés sous un angle de 0-10 °, de préférence 1-8 °.

8. Outil de perçage selon l'une quelconque des revendications 1 à 6, **caractérisé en ce que** les systèmes d'entraînement complémentaires sont constitués de rainures en forme de T et de galets.

9. Outil de perçage selon l'une quelconque des revendications 1 à 6 ou 8, **caractérisé en ce que** les galets d'entraînement présentent un talon de clavette incliné vers la tige de serrage (33) en position d'utilisation et peuvent être fixés par vis sur la tige de l'outil de perçage, de manière à ce que le talon de clavette serre la pointe de l'outil de perçage de manière axiale.

10. Outil de perçage selon la revendication 1 ou 2, **caractérisé en ce que** le moyen de centrage axial est constitué d'un tenon cylindrique, concentrique et enfichable dans la tige de l'outil de perçage et muni de retraits et de saillies extérieurs.

11. Outil de perçage selon la revendication 10, **caractérisé en ce que** les retraits sont placés de manière radiale sur le tenon et qu'ils sont conçus pour accueillir une vis, soit en complément soit en remplacement des systèmes d'entraînement disposés sur le pourtour.

12. Outil de perçage selon la revendication 10, **caractérisé en ce que** les retraits sont noyés dans les tenons (29) en tant que centrage médian (30), pour un traitement rotatif des pointes de l'outil de perçage (21) ou qu'ils sont disposés sous forme de saillies sur la face frontale du tenon.

13. Outil de perçage selon l'une quelconque des revendications 1 ou 2, **caractérisé en ce que** le moyen de centrage axial est constitué d'un alésage concentrique qui peut être retourné par-dessus une saillie correspondante, située sur la tige de l'outil de perçage et qui est muni de saillies et de retraits qui s'étendent dans le sens axial.

14. Outil de perçage selon l'une quelconque des revendications précédentes, **caractérisé en ce que** les systèmes d'entraînement (5b, 5c) s'étendent de préférence à peu près de manière parallèle aux arêtes tranchantes (2, 3, 12, 13, 23).

15. Outil de perçage selon la revendication 3, **caractérisé en ce que** le tranchant radial interne (3) d'une arête tranchante fait saillie, de la valeur de 0,2 à 6 fois sa largeur dans le sens axial, par rapport au tranchant extérieur (13, 23).

16. Outil de perçage selon la revendication 3 ou 15, **caractérisé en ce que** le tranchant radial interne (3) déborde du tranchant externe (13) de 5 mm au maximum, dans le sens radial.

17. Outil de perçage selon l'une quelconque des revendications 1 à 16, **caractérisé par** un rapport de longueur de 2 à 10 du tranchant interne radial par rapport à l'ensemble de l'arête tranchante.
